(19) **Europäisches Patentamt**

**European Patent Office**

**Office européen des brevets**

(11) **EP 1 168 011 A1**

(12) **EUROPEAN PATENT APPLICATION**

(43) Date of publication:
**02.01.2002 Bulletin 2002/01**

(51) Int Cl.⁷: **G02B 6/30**, G02B 6/42

(21) Application number: **00401762.0**

(22) Date of filing: **21.06.2000**

| | |
|---|---|
| (84) Designated Contracting States:<br>**AT BE CH CY DE DK ES FI FR GB GR IE IT LI LU**<br>**MC NL PT SE**<br>Designated Extension States:<br>**AL LT LV MK RO SI**<br><br>(71) Applicant: **Corning Incorporated**<br>**Corning, New York 14831 (US)**<br><br>(72) Inventors:<br>• **Delprat, Daniel**<br>**Corning, NY 14831 (US)** | • **Fendler, Manuel**<br>**Corning, NY 14831 (US)**<br>• **Lupu, Anatolie**<br>**Corning, NY 14831 (US)**<br><br>(74) Representative: **Boon, Graham Anthony et al**<br>**Elkington and Fife, Prospect House, 8 Pembroke**<br>**Road**<br>**Sevenoaks, Kent TN13 1XR (GB)** |

(54) **Hybrid alignment of optical components using calibrated substrates**

(57)     An optical apparatus (10) is provided including a first chip (12) having at least one alignment feature (24,240) in the first chip (12) at a pre-selected location. A second chip (14) has a plurality of alignment couplers (18,340) formed in the second chip (14) at pre-selected locations relative to the at least one feature (24,240), wherein one of the plurality of couplers (18,340) of the second chip (14) is coupled to the at least one feature (24,240) of the first chip (12).

Embodiments describing the coupling of optical waveguides with optical fibers, lasers and optical waveguides using projections (24) and recesses (18), some of the recesses not being coupled, are disclosed.

FIG. 1

## Description

## BACKGROUND OF THE INVENTION

### 1. Technical Field

The present invention generally relates to optoelectronic/photonic devices and, more particularly, to a method and apparatus for passively or actively aligning, tacking, bonding, or otherwise assembling an optoelectronic/photonic device with a matching substrate.

### 2. Background

Photonic component hybridization concerns integrating optical components on a substrate or a platform with optoelectronic/photonic devices. This technology involves electrically and mechanically bonding or otherwise assembling the optoelectronic/photonic device with the optical components (e.g. waveguides, lasers, gratings, etc.) on the substrate. A fundamental issue in photonic component hybridization is the accurate positioning of the device relative to the substrate which typically requires accuracy within one micrometer (1 μm) for proper optical coupling. Past attempts to ensure such positioning accuracy include active and passive alignment techniques but the 1μm precision accuracy is difficult to achieve.

A widely used passive alignment technique involves the use of flip-chip solder bonding for packaging of optoelectronic components to optical waveguides. This method completely relies on the solder surface tension and the design of the wettable pads to align the waveguides to the optoelectronic components. In this bonding sequence, a chip (e.g., the device) with a plurality of solder bumps formed thereon is roughly aligned over a substrate using a pick and place machine, the temperature of the assembly is then raised above the solder melting temperature, and, upon the solder melting, surface tension appears at all interfaces which moves the chip to the lowest potential energy point which corresponds to alignment with the substrate. Once the chip is aligned, the solder is cooled.

Tests have shown that such passive alignment techniques range in accuracy from a submicron level to more than 10 microns due to variations in the solder bonding process. Current dimensional accuracy requirements for photonic component hybridization is about 0.5 micrometers in the X, Y, and Z directions. As such, the uncertainty in alignment accuracy of this technique makes it unsuitable for photonic assemblies.

To eliminate the dependency of alignment accuracy on the solder bonding process, several techniques employing stops, standoffs, pedestals, registration features, fiducials, assembly marks, or other projections of varying shapes coupling with receiving recesses or trenches have been employed. For example, the chip to be attached has projections that are inserted into recesses on the substrate in a precisely fitted fashion. The dimensional accuracy of the projections and the recesses is determined either by lithography or by micro-milling or micro-drilling tolerances, typically less than one micrometer. The absolute positioning on the assembly between the two chips thus relies on the alignment between the optical waveguides of each of the chips. As described, the recesses and corresponding projections formed on the chips provide the assembly marks for the chip waveguide alignment. However, the absolute positioning to obtain good optical coupling also depends on a good positioning of these assembly marks when the projection is captured within the recess. Due to fabrication imperfections, the desired 1 micrometer alignment precision is difficult to obtain, reducing the yield of acceptable final products.

Another exemplary passive alignment technique uses features in the chip to fix the X and Y positions of the assembly. In this technique, two front pedestals and one side pedestal are provided on the surface of one chip and a vertical side wall is provided on the other chip. When mounted, the front face of the second chip contacts the two front pedestals of the first chip and the side wall of the second chip mates with the side pedestal of the first chip. This theoretically precisely aligns the two chips, if tolerances were kept at a minimum.

One type of active alignment technique uses a flip-chip machine which yields very precise and accurate placement. Active alignment using commercially available flip-chip machines demonstrate accuracy tolerances of about 0.5 micrometers. However, such flip-chip machines are very expensive.

In view of the foregoing, it would be desirable to provide a method and apparatus for more precisely aligning a chip to a substrate which overcomes the drawbacks of the prior art.

## BRIEF DESCRIPTION OF THE DRAWINGS

In order to appreciate the manner in which the advantages and objects of the invention are obtained, a more particular description of the invention will be rendered by reference to specific embodiments thereof which are illustrated in the appended drawings. Understanding that these drawings only depict preferred embodiments of the present invention and are not therefore to be considered limiting in scope, the invention will be described and explained with additional specificity and detail through the use of the accompanying drawings in which:

FIG. 1 is a side elevational view of a device 12 and substrate 14, according to the present invention;
FIG. 2 is a hybrid assembly application of FIG. 1 where two optical components 12 and 33 are mounted on the same motherboard 14, according to the present invention;
FIG. 3 is a top-view of the substrate, motherboard, or second chip 14 of FIG. 2, according to the present invention;

FIG. 4 is a side elevational view of a projection 24 on the device 12 of FIG. 1 engaging another alternate recess 18''' of the substrate 14, according to the present invention;

FIG. 5 is a side elevational view of the device 12 of FIG. 1 and a substrate 14 having a plurality of recesses 18 varying in displacement values along the X-direction, according to the present invention;

FIG. 6 is a top perspective view of the device 12 of FIG. 1 and a substrate 14 having a plurality of recesses 18 varying in width and a degree of freedom in the Y-direction, according to the present invention;

FIG. 7 is a top view of the substrate 14 of FIG. 6 having the plurality of recesses 18 varying in width providing thus the displacement values along the Z-direction for the embodiment of the device 12 of FIG. 1 and having a degree of freedom in the Y-direction, according to the present invention;

FIG. 8 is a top view of a substrate 14 similar to the one in FIG. 6 but having the plurality of recesses 18 varying in displacement values along the X-direction and a degree of freedom in the Y-direction, according to the present invention;

FIG. 9 is a top perspective view of the device 12 of FIG. 1 and a substrate 14 having a plurality of recesses 18varying in displacement along the X-direction and in width in order to provide displacement values along Z- direction for the embodiment of the device 12 and additional V-grooves 620 providing a degree of freedom in the X-direction, according to the present invention; and

FIG. 10 is a top perspective view of the device 12 of FIG. 1 and a substrate 14 having a plurality of recesses 18 varying in displacement along the X-direction and in width in order to provide displacement values along Z- direction for the embodiment of the device 12 and redundant waveguides, allowing the degree of freedom in the X-direction, while removing the degree of freedom in the Y-direction, but allowing a hybrid alignment integration in the X-direction upon flip-chip assembly (similar to FIG. 4), according to the present invention;

## DETAILED DESCRIPTION OF THE PREFERRED EMBODIMENTS

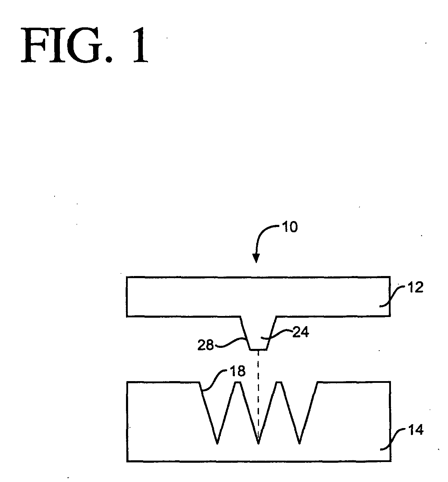

The present invention is directed towards a method and apparatus for assembling (i.e. mechanically and/or electrically interconnecting) an optoelectronic device or an optical component with a substrate or a motherboard supporting optical components thereon. In accordance with the general teachings of the present invention as exemplified by FIG. 1, an apparatus 10 includes a first chip 12, such as an optical component or an optoelectronic/photonic device, having at least one mating member, such as a projection 24 in the first chip 12 at a pre-selected location. A second chip 14, such as a motherboard, has a plurality of receiving members, such as recesses 18 formed at pre-selected locations relative to the at least one projection 24. For facilitating a chip-mount assembly of the first and second chips, one of the plurality of recesses 18 of the second chip 14, closest to the target value for the size of the positioning element of the first chip, at the normally expected location of contact, is coupled to the at least one projection 24 of the first chip 12.

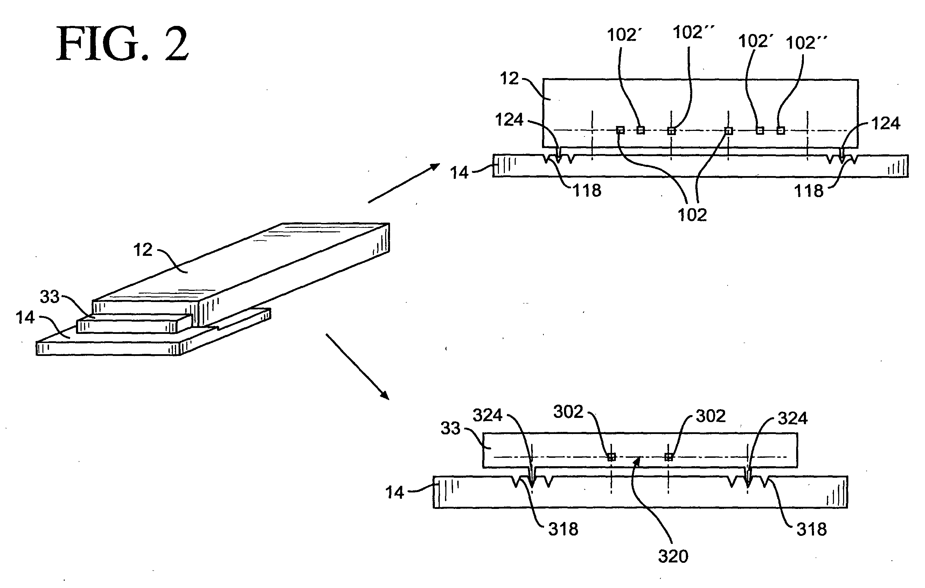

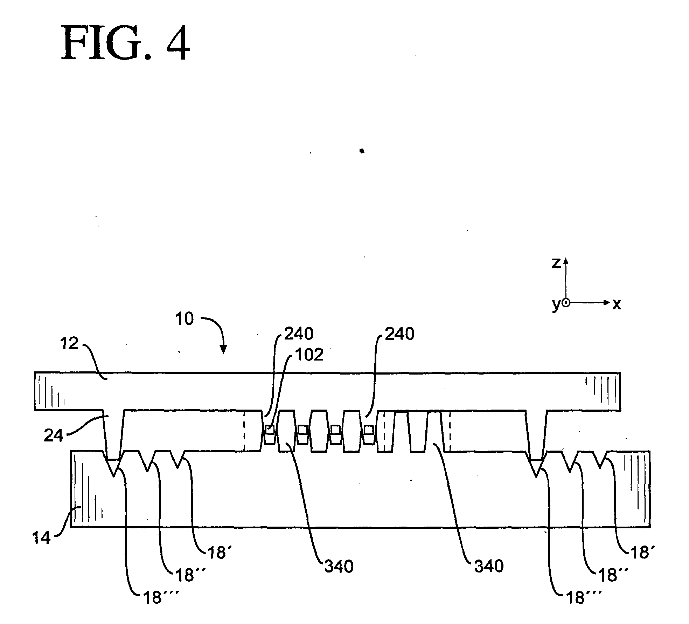

It is to be noted that the numbering of the first and second chips can be reversed. Interchanging the placement of the recesses and projections on these chips is also contemplated by the present invention. The assembly marks in terms of the mating member or the receiving member can also be interchanged such that the receiving member can mean the projection 24 and the corresponding mating member can mean the recess 18. Hence, one recess can capture the best-aligned one of a plurality of projections. Additionally, as seen in FIGS. 4-10, the mating and/or receiving members can be waveguides, some of which are coupled together. Numerous variations in the implementations of the plurality of the receiving members can be obtained. For example, the receiving members can be a combination of recesses and waveguides. The pattern of receiving members can vary infinitely, in one or two dimensions and the pattern of receiving members can also vary within themselves to accommodate the mating with more than one component as the first chip. For example as illustrated in FIGS. 2-3 to be described with more detail later, the receiving members 118 of the lower level portion of a motherboard, such as a silicon optical bench, represented by a second chip 14, can have a first pattern 31 to accommodate the dimensional tolerances of the mating members 124 of a first chip 12, for example, a passive optical component. Similarly, the receiving members 318 of the higher level portion of the same motherboard 14, have a second pattern 32 to accommodate the tolerances of the mating members 324 of another chip (or the third chip 33), for example an active optical component, such as a laser array. Preferably, the mating members 124 and 324 in each of the component chips 12 and 33 are aligned at a pre-selected location offset from the level of their respective waveguides 102 and 302. In this example, the passive component chip 12 has the waveguides having a core 102 (waveguides and cores will be interchangedly referenced as 102) monolithically integrated within, instead of the motherboard 14 having those same waveguides, as in other applications. Both component chips 12 and 33 are mounted on the same motherboard, such as a silicon optical bench (or the second chip 14), having the different levels to properly optically align front and back the active waveguides 302 with the best-matched passive waveguides 102. Alternatively, in a different combination of components and motherboard assembly, the receiving members of a first optical component chip can have a first pattern to accommodate the tolerances of the mating members of a motherboard. The receiving members of another optical component chip can have a second pattern to accommodate the tolerances of the mating members of a second portion of the same motherboard, where both components are mounted on the same motherboard members.

In its simplest terms, the invention generally teaches an extra choice, in the form of a receiving location, for the more precise placement of a corresponding mating member.

Referring back to the simple diagram of FIG. 1, the locations of the recesses 18 of the substrate or chip 14 are selected to approximate the best guesses of the location of the projections 24 in the device or first chip 12. Hence, the number of the recesses 18 is formed to be greater than the number of projections 24 to provide more than one best guess of the properly aligned projection 24. The projections 24 include angled walls 28 for engaging the substrate of second chip 12 adjacent the recesses 18. The orientation of the device 12 relative to the substrate 14 is controlled by selecting the best matched recess out of the plurality of recesses 18 which are varying in at least one dimensional placement or in actual dimensions of the recesses 18.

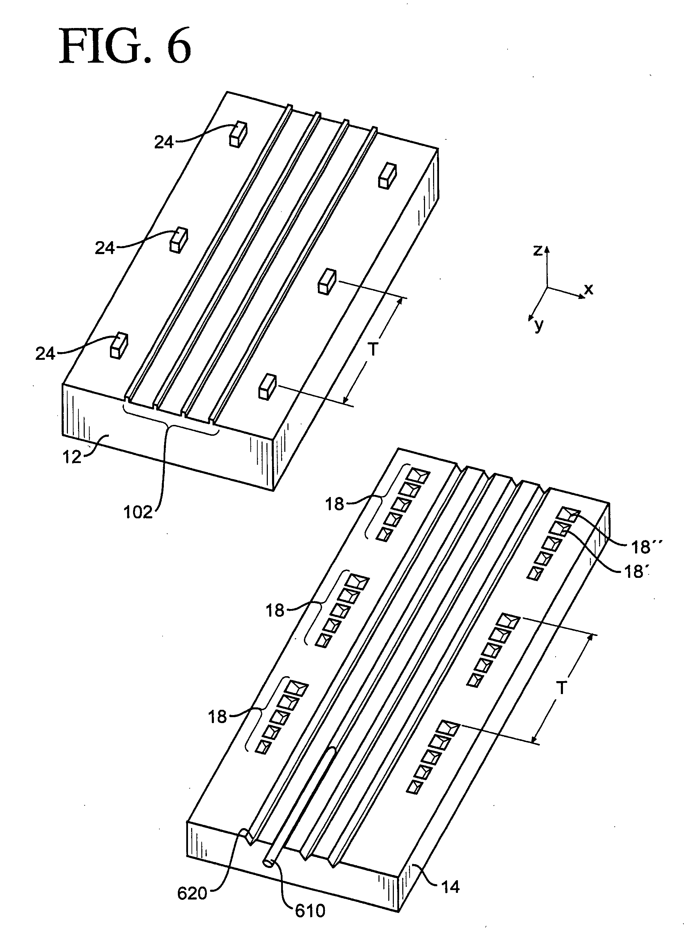

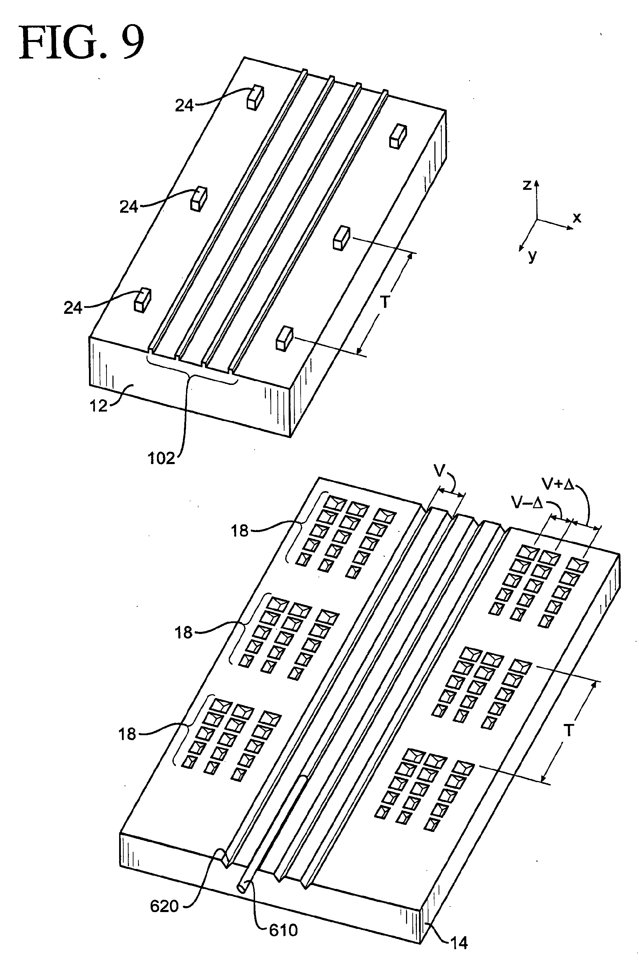

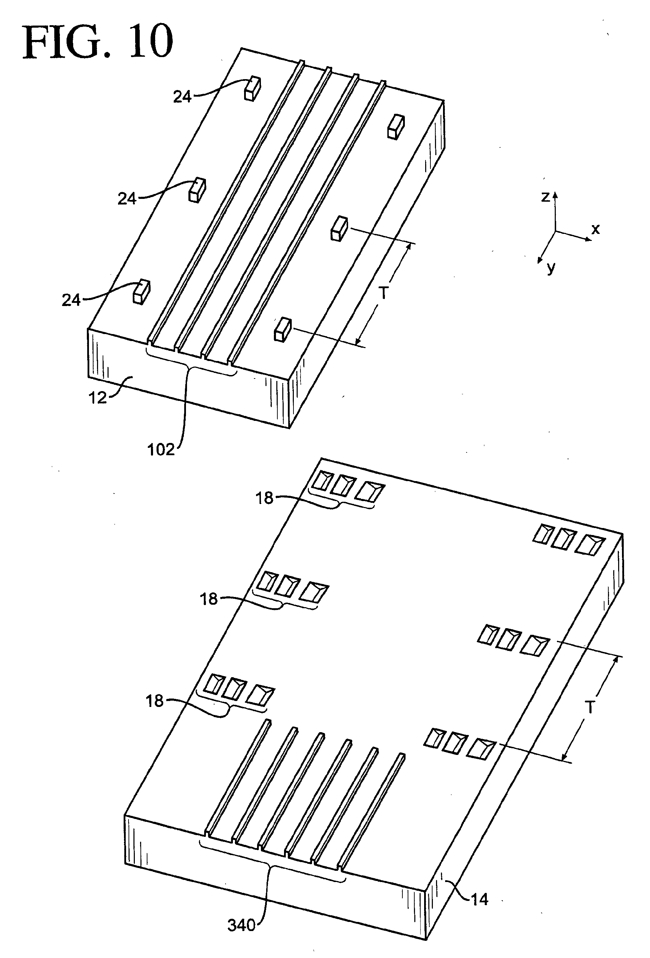

Referring to FIGS. 6-9, a first type of optical components assembly deals with the alignment of optical fibers 610 attached in V-grooves 620 with an optical component, as referenced by the first chip 12, with a corresponding number of waveguides for mounting on the motherboard, as referenced by the second chip 14, using multiple positioning recesses 18, as one type of the plurality of receiving members for mating with the mating members 24 of the first chip or device 12. In this assembly, the initial position of the fiber 610 in the V-groove 620, serving as a waveguide, is not fixed along the Y direction. It is important to note that no additional waveguides 620 or 102 are required when the recess 18 variation is realized along the optical axis Y. Additional waveguides 340 are introduced only when a second recess variation is realized perpendicular to the optical axis, as in Fig. 9 and FIG. 10 to be described later. Having the flexibility to move the fiber 610 in the V-groove 620 of the second chip 14 to mate with the already aligned corresponding waveguide 102 of the first chip 12, allows one to obtain up to two degree of freedom, in the receiving member variation of the recesses 18 in the assembly of FIG. 9. Hence, one degree of freedom is used to obtain an accurate vertical alignment and the second degree of freedom is used for an accurate lateral alignment as seen in FIG. 9.

Referring to the perspective view of FIG. 6 as an example of the first type of assembly, device or the first chip 12 is a laser array having the plurality of waveguides 102 to form an active optical component. Substrate or the second chip 14 is an example of a silicon motherboard having V-grooves 620 for locating optical fibers 610 within and for receiving the device 12 to be located on top of the substrate 14, coupling the fibers 610 to the waveguides 102 in a flip-chip arrangement. In accordance with the teachings of the present invention, a tolerance-compensating receiving member varying in at least one dimension from an adjacent receiving member forms a periodically spaced one-dimensional or two-dimensional alignment or positioning pattern having some calibrated dimension variations around a nominally expected value of the location of the expected mating member counterpart is taught in order to achieve accurate vertical and/or lateral positioning by allowing a degree of freedom for the device positioning on top of the substrate 14. As described previously, the assembly marks can be a mating member, such as a waveguide, a positioning stand, a pedestal, a protrusion, a projection or can be a receiving member, such as a corresponding groove, hole, recess, or any type of linkage linkable with the mating member or counterpart. In this example of FIG. 6, the mating member is a positioning stand or projection 24 while the counterpart receiving member is a plurality of positioning holes or recesses 18 for receiving a smaller number of mating members or vice a versa, a plurality of mating members coupling with a smaller number of receiving members. Hence, the reverse is also suggested by the present invention where the mating member is a positioning hole and the receiving member is a plurality of positioning projections.

In the example of FIG. 6, a pattern of periodically spaced (T) positioning recesses 18 in the Y-direction predefined according to anticipated tolerances are located on the silicon motherboard substrate 14 at calibrated dimensional locations around the nominal expected location of the counterpart projection 24. A structure of projections 24 having the same spacing period T is disposed on the active component device 12. Along a common Y-axis through the centerline of the plurality of the recesses 18, the plurality of recesses can be seen in FIG. 6 to include at least one tolerance-compensating receiving member 18" varying in width from the adjacent recess 18'. Hence, the first chip forms the active optical component or device 12 for hybrid integrating with the calibrated substrate 14 having the progression of varying recesses 18 to compensate for the tolerances of the projections or mating members 24 of the device 12.

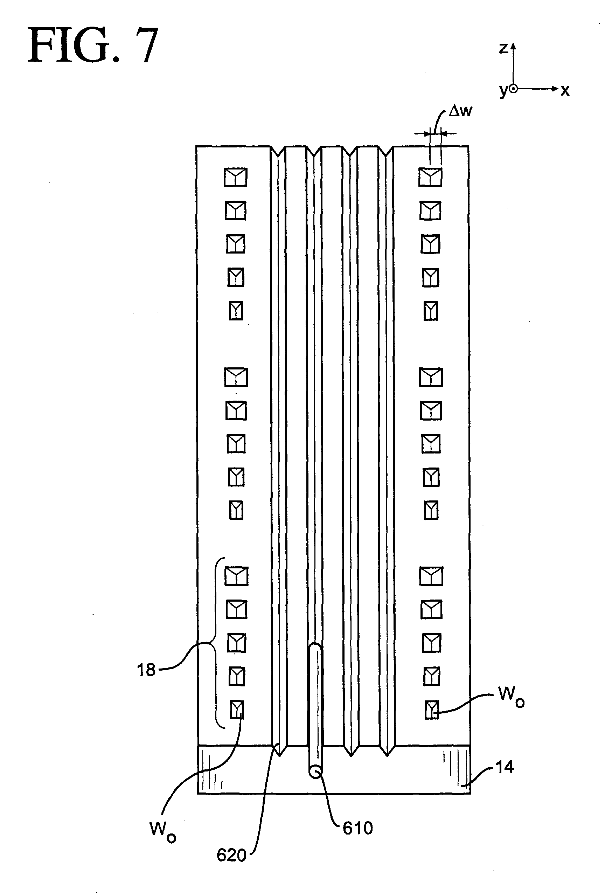

Referring to both FIGS. 6 and 7, the one-dimensional periodic recesses 18 with a degree of freedom in the Y-direction can be seen. Hence, the device 12 of FIG. 6 can be moved in the Y-direction to find the best-fit pair of width-varying recesses 18 on the substrate or motherboard 14.

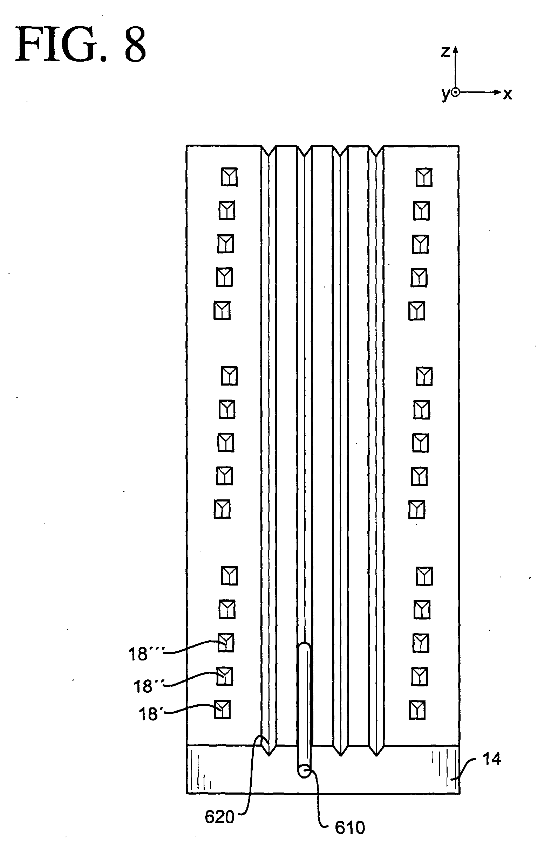

Referring to FIG. 8, a different rule pattern of the recesses 18 are represented where the plurality of recesses include at least one tolerance-compensating receiving member or dimension-tolerant-recess 18' varying in a lateral displacement or in the X-direction as referenced from a common V-groove 620 from the lateral displacement of an adjacent recess 18". In order to achieve X direction or lateral alignment, as shown on Fig. 8, the plurality of recesses 18 follow a rule pattern that is generally described by the following equation:

$$\varepsilon_i = \varepsilon_0 + i\Delta\varepsilon \qquad \text{(eq.1)}$$

where $\varepsilon_i$ is the lateral (or X direction) misalignment variation,

$\varepsilon_0$ is the initial misalignment,
$\Delta\varepsilon$ is the variation parameter, and
i is the index of the number of recesses forming the rule pattern for N number of recesses starting from 0.

Thus, equation 1 can be applied, changing all the epsilons ($\varepsilon$'s) to the width parameter (w) to obtain the equation $w_i = w_0 + i\Delta w$ describing the rule pattern of recesses 18 in FIGS. 6 and 7, for example.

Substrates 14 having such different rule patterns of the recesses 18 of FIGS. 7 and 8, or of another pattern, whether random or of a best-guess estimation can be matched to the device 12 of FIG. 6 in a post process dimension analysis to determine the best positioning for the anticipated recess 18 having the closest parameters to the initially assumed parameter of width, alignment or of another dimension. Hence, the device 12 of FIG. 6 can be moved incrementally in the lateral or vertical positions (X or Z) to find the best-matched recesses 18 of FIGS. 7 or 8 because the waveguides 102 of the device 12 of FIG. 6 is already assumed to be correctly align with the V-grooves 620 of the substrate 14, and the fiber 610 can be moved within the groove of FIG. 7 or FIG. 8.

Alternatively, if the waveguides 102 of the device 12 can not be assumed to be already correctly aligned with the V-grooves 620, then redundant or extra waveguides in the device or extra V-grooves in the substrate can be provided with the fiber 610 inserted in the best aligned pair of waveguide 102 and V-groove 620 in FIG. 9.

Referring to FIG. 9, the same degree of freedom for the device movement in the Y-direction is available, as in FIG. 6. A two-dimensional periodic structure or pattern of recesses 18 can be formed for a more precise alignment by combining the one-dimensional recess patterns of FIGS. 7 and 8. Hence, precise vertical or Z-direction positioning can be obtained by having the plurality of recesses 18 vary with a hole width variation in the Y-direction and an additional precise lateral alignment in the X-direction by having the recesses vary in displacement in the X-direction (such that they have a hole misalignment variation ($\Delta$)in the X-direction, as referenced from the pitch V of the V-grooves 620). After a post-process dimension analysis the recess having the two best dimensional parameters will be chosen as the new target value for the anticipated position of the projection 24 of FIG. 9.

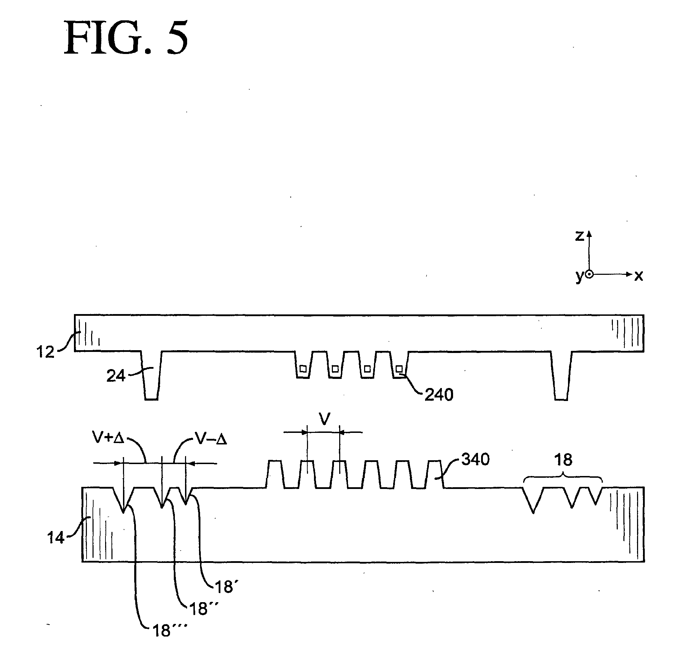

Referring to FIGS. 4-5 and 10, a second category of optical components assembly is shown where the inventive plurality of recesses or receiving members could be used. This second type deals with a positioning of optical component, represented by the first chip 12, on a motherboard, represented by the second chip 14, having monolithically integrated waveguides 340 as another form of a mating member. This time, the initial positions of the waveguides 340 are fixed along the Y direction. For this assembly the location of the core 102 of a plurality of component waveguides 240, serving as the plurality of receiving members, of the optical component (or of the first chip 12) is to be optically coupled in-front of the waveguides 340 of the motherboard (or of the second chip 14) in the optical axis of Y. In this type of an assembly, it is possible to achieve a degree of freedom, in order to apply the inventive concept of a plurality of recesses, by realizing a translation in the X direction in the plurality of recesses 18, perpendicular to the optical axis of Y. This degree of freedom is possible by providing additional redundant waveguides or receiving members. For N positioning recesses 18, N-1 additional waveguides 340 are implemented as depicted by FIGS. 4-5. Additional waveguides can be implemented either on the motherboard (or on the second chip 14), as receiving members, or on the optical component (or on the first chip 12), as mating members, to provide more choices for aligning with the cores on the waveguides of the other chip. The degree of freedom thus achieved, by the redundant waveguides 340' and 340", is used to either realize an accurate vertical (FIG. 4) or lateral (FIG. 5) alignment.

Referring to the back-view of FIG. 4, as an example, individual substrate projections 340 might represent receiving waveguides for the plurality of lasers formed by the optical waveguides 240 having cores 102. Alternatively, the waveguides do not have to be in individualized protrusions but can all be contained within one corresponding projection indicated by dashed marks, one on the device 12 or the first chip and one on the substrate 14 or the second chip. In either case, the device waveguide 240, as a type of mating member, need to align with a subset of the plurality of redundant substrate waveguides 340, as a type of receiving members, for the two arrays of waveguides to couple front and back with each other. This array of waveguide alignment will automatically occur once the best-fit recess, out of the plurality of recesses 18, as another type of receiving members, receives the projection 24 as a corresponding mating member. The redundant waveguide substrate projections 340, are provided to allow the horizontal or lateral shift of the device 12 and the substrate 14, relative to each other, during the self-alignment process to find the best-fit recess 18.

The best-fit recess can be found, by trial-and-error because one of the plurality of recesses will include, by predetermined design, at least one tolerance-compensating receiving member or dimension-tolerant-recess varying in at least one dimension from an adjacent recess, such that a closer positioning tolerance, less than 1 micrometer can be reached. For example, in FIG. 4, to achieve accurate vertical alignment of the laser array formed by the device waveguides 102 above the substrate projections monolithically burying the receiving substrate waveguides 340 for the laser array, the plurality of recesses 18 include at least one dimension-tolerant-recess 18', that vary in depth from an adjacent recess 18". Recess 18" further has a deeper depth than recess 18"'. In this example, the pair of recesses having the most depth 18"' allows the top device waveguides 240 to vertically align (Z-direction) with the bottom substrate waveguides 340. Hence, a Y-direction alignment is achieved between the device waveguides 240, representing the laser array presence behind the front substrate waveguides 340. However, viewing from the back in FIG. 4, the device waveguides 240 containing the cores 102 appear in front of the substrate waveguides 340. The unused, extra, or redundant waveguides formed by the substrate projections 340 could serve as stops 340' to find the deepest penetration of the projection 24 into the deepest recess 18"'.

One way to find the best matched recess is to perform dimension analysis to find the optimum recess out of the plurality of recesses 18 that is closest to the target expected value or location of the recess counterpart, projection 24 in this case. If there are difficulties to perform such an analysis, it is possible to perform bonding and measurement tests, such as checking for optimum optical coupling, in order to determine the best-matched recess. In general, the position of the best vertical alignment (Z-direction) is determined by the relative coupled dimensions of the projection 24 and the recess 18. In other words, how stable or well, the projection 24 sits in the recess 18 or alternatively, how well a recess covers a projection. A simple eye check or another manual inspection system can be used to check for the best-matched recess. Alternatively, automated systems for dimension analysis are commercially available now and such inspection is less time consuming and preferable when possible. The automated inspection seems to be practically always possible for vertical (Z-direction) alignment but is less evident for lateral alignment along the X direction. For X-directional alignment, a light check test is preferably applied.

Preferably, as part of the normal assembly operation, a bonding member in the form of a solder bond or conductive adhesive (not shown) is coupled between the first and second chips 12 and 14 to electrically interconnect (or mechanically with nonconductive adhesive) the device 12 and substrate 14. The surface tension of the solder bonds is used, during reflow or another assembly method, to move the device 12 relative to the substrate 14 while alignment of the device 12 relative to the substrate 14 is controlled by the interaction of the projections 24 with the substrate 14 adjacent the recesses 18.

The plurality of recesses 18 and projections 24 is formed preferably by injection molding or micro-molding or by wet or dry-etching techniques. Precisely formed, slanted projections 24 having a pyramidal shape have been achieved in a device 12 made of silicone using wet etching techniques. The angle of the projections 24 is controlled by the crystalline structure of the silicon.

The number of projections 24 and higher number of recesses 18 is preferably optimized so that friction between the projections 24 and the substrate 14 adjacent the recesses 18 does not interfere with the vertical (Z-direction) and horizontal surface tension restoring forces of the solder bonds.

The assembly sequence involves positioning the device 12 on the substrate 14 such that the solder bonds are interposed between them. If desired, heat and pressure can be applied for a short period of time at this point for tacking the device 12 to the substrate 14 via the solder bond. Due to the geometry of the device 12 and substrate 14 and the substrate 14 having more recesses than the number of projections 24, and the geometry of recesses to optimally accommodate the lesser number of projections 24, the projections 24 should now each roughly align with the best-fit recess 18. A pick and place machine or another handler is preferably employed for the above described initial placement process. However, depending on the dimensions, manual assembly could also be used.

After the device 12 is positioned over the substrate 14, the apparatus 10 is subjected to a reflow cycle. During the reflow cycle, the solder bond in between melts allowing the apparatus 10 to collapse in height. During the collapse, the projections 24 engage the substrate 14 adjacent one of the recesses 18 and guide the movement of the device 12 relative to the substrate 14. The geometry and extra number of recesses 18, relative to the projections 24, define the alignment accuracy of the device 12 relative to the substrate 14.

In a high volume manufacturing environment, a pick and place machine is used to initially position the device 12 on the substrate 14. The apparatus 10 is then transferred to a conventional reflow oven to melt the solder bond. It is important that the device 12 stay in place relative to the substrate 14 during the transfer between the pick and place machine and the reflow oven and also through the initial stages of reflow.

It is to be noted that the choice of attachment method depends on the size of the recesses 18 and on the tolerance for positioning accuracy. If, for example, the size of the projection or pedestal 24 is of the order of millimeter and the error margin for positioning is large even hand attachment is possible. The present invention of extra recesses for the best-fit receiving of a projection is usable for any attachment method. However, for most type of optical applications, the size of recesses would be of the order of hundred micrometers (μM) and one could use some kind of flip-chip or pick- and place machines. Optionally, it is possible to combine conventional attachment or handling methods with the use of vibrations to facilitate insertion.

Vibrating waves or other attachment or handling methods could be applied such that the device 12 and substrate 14 move relative to one another to facilitate finding the best match of the best-fit recess for each projection 24. With the assistance of gravity, the projection 24 falls into one of the extra or plurality of recesses 18 in FIG. 1. Vibration or some other kind of motion from the attachment method thus induces alignment. This best-fit recess matched with the projection 24 enables optimization of the alignment process which improves yield.

Referring to FIG. 5, the plurality of recesses 18 include at least one tolerance-compensating receiving member or dimension-tolerant-recess 18''', 18'', and 18' varying in proximity from their adjacent recesses, respectively, for achieving lateral precision alignment. Assuming the pitch between adjacent lasers buried within the device waveguides 240 has a distance of V, the substrate waveguides 340 vertically lining up with the device waveguides 240 also have the pitch of V. To achieve a closer tolerance than one-micrometer (1μm) a delta difference Δ could be predefined to be 0.5μm. To compensate and translate a tolerance pitch difference about 0.5um, the proximity between recesses 18''' and 18'' is set to be V+ Δ and the proximity between recesses 18'' and 18' is set to be V- Δ. The pair of projections 24, as one form of mating members, will then be coupled down to the best matched pair of corresponding recesses, as a corresponding form of a receiving member, within 0.5um of the pitch.

Referring to FIG. 10, as a perspective view, the plurality of recesses 18 are seen to be varying in width. In this second type of assembly, the plurality of one-dimensional varying recesses 18 is provided in a substrate 14 without a degree of freedom in the Y-direction, as available in FIGS. 6 and 9. Here the laser or device waveguide array of device 12 must abut with at least some of the silica on silicon substrate waveguides 340 (or monolithically integrated waveguides) which act as stops. To overcome this Y-directional limitation, redundant waveguides 340 are formed such that there are more substrate waveguides than the laser or device array waveguides containing the cores 102 in the device 12 that needs coupling. The plurality of recesses 18 can then be varied in the X-direction to have a progressive dimensional variation in width as seen in FIG. 10 or the variation in depth as seen in FIG. 4 and/or the lateral displacement Δ of FIG. 5, or in a combination of such dimensional compensating patterns of the mating and receiving members. An accurate vertical or lateral alignment is then obtained similarly as when the device 12 was coupled with the fibers 610 of FIGS. 6 and 9.

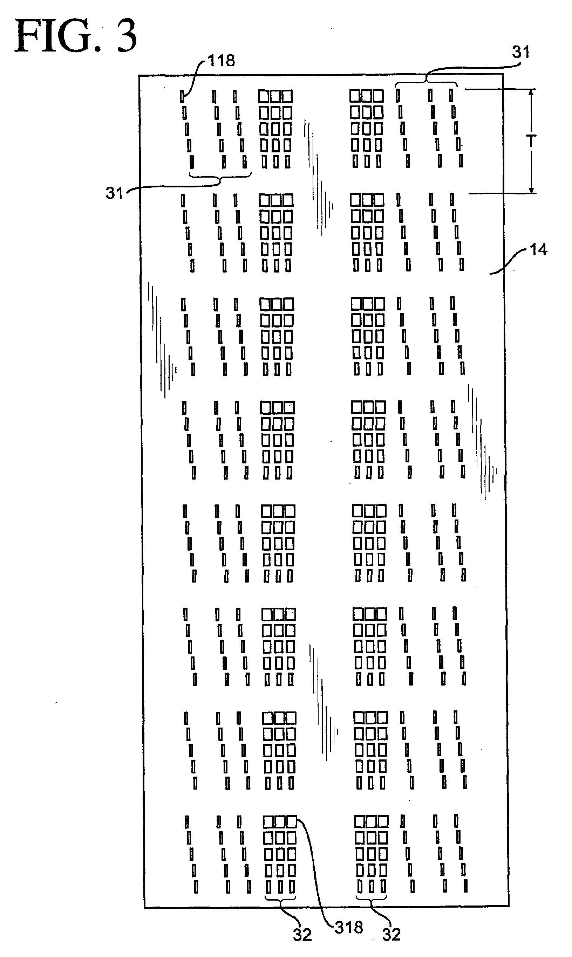

Referring to FIGS. 2-3, a combination of recesses pattern is used to properly align two different optical components on a single motherboard, such as a silicon optical bench. Here, another possible assembly application is to use the two degrees of freedom to obtain an accurate alignment but only for one direction. The advantage of this is that one degree of freedom is used to achieve a coarse alignment and the second for the fine alignment. To realize such a coarse and fine adjustment for an accurate vertical alignment, a two-dimensional plurality of recesses 318, for the receiving members, is manufactured on the motherboard 14 as shown by the pattern 32 in FIG. 3. Contrary to the case depicted in FIG. 9, there is no displacement variation along the X direction in the recess pattern 32. The variation of the recesses waist, preferably aligned in the Z or vertical direction with the optical waveguide 302, for the anticipated depth penetration of the mating member 324 of the active component (or of the third chip 33) is however set differently for the translations along the X or Y direction to compensate for the depth and width dimensional tolerances which can independently vary. The waist of the i,j-th positioning recess 18 will vary according to the rule:

$$w(i,j)=w_0+i\cdot\Delta w_1+j\cdot\Delta w_2 \qquad (eq.2)$$

where

i- index corresponds to the variation along the X direction and j- index along Y direction;
$w_0$ is the target waist value 320 where the nominal mating member off-set from the center of the optical waveguide 320 is expected to reside;
$\Delta w_1$ is for example the coarse waist variation; and $w_2$ is the fine waist variation.

This two-dimensional variation in one recess approach provides the advantage to realize a much greater span with a smaller number of additional waveguides 102' for waist variation when compared to the solution presented in FIGS. 6-7 having only a one-dimensional variation per one recess.

As an example, assume that i=-1; 0; 1, j= -2, -1; 0; 1, 2, $\Delta w_1$=1μm, $\Delta w_2$=3μm. For this case the span of $w_0$ variation is between -8μm and +8μm. Only two additional waveguides 102' would be needed in this configuration.

As shown by the positioning recess pattern 31, it is also possible to obtain an accurate lateral alignment using the extra recess principle.

For the very important and widely used class of hybrid assemblies where two optical components 12 and 33 are mounted on the same motherboard 14 of FIG. 2, it is possible to realize for each component 12 and 33 a positioning recess arrangement with two degrees of freedom on the motherboard 14. The system now has a total of four degrees of freedom because the replication of the pattern allows the components chips 12 and 33 to move back and forth, along the Y direction. One arrangement of recesses 118 is used to produce a lateral alignment, as seen in the pattern 31 while a second arrangement of recesses 318 is for the vertical alignment, as seen in the pattern 32. With this arrangement, the main advantage is that the number of additional waveguides 102' and 102" can be greatly reduced. Suppose, for example, that there are $X1\times Y1$ recesses 118 for the first component 12 and $X2\times Y1$ recesses 318 for the second component 33, the number of additional waveguides is then X1-1+X2-1. In particular when X1=X2=1, no additional waveguides 102' are required because there is only one degree of freedom for each component.

It is important to note that the number of recesses 318 and 118 as well as their period T along the optical axes should be the same for both components 12 and 33:

$$Y1=Y2$$

$$T1=T2$$

For example, assume Y1=Y2=5, X1=X2=3. In this case we obtain fifteen values for both vertical recesses 318 and lateral recesses 118 with only four additional waveguides 102'. For the solution described in FIGS. 6-7, fourteen additional waveguides would be required to obtain the same result.

Thus, an apparatus and method are provided for aligning an optoelectronic/photonic device relative to a substrate. Either the device or substrate is provided with an extra assembly mark or alignment feature, such as projections on one, while the other is provided with complementary extra recesses for each or at least one projection. Self-alignment is achieved using the best-fit recess with each projection between the device and substrate.

Those skilled in the art can now appreciate from the foregoing description that the broad teachings of the present invention can be implemented in a variety of forms. For example, the projections on one chip can be substituted with recesses with the other chip having the corresponding receiving feature, such as the projection or pedestal, each having a multitude of pattern to compensate for dimensional tolerances. Therefore, while this invention has been described in connection with particular examples thereof, the true scope of the invention should not be so limited since other modifications will become apparent to the skilled practitioner upon a study of the drawings, specification, and following claims.

**Claims**

1. An optical apparatus comprising:

   a first chip having at least one mating member in said first chip at a pre-selected location; and a second chip having a plurality of receiving members formed therein at pre-selected locations relative to said at least one mating member, wherein one of said plurality of receiving members of said second chip is coupled to said at least one mating member of said first chip.

2. The apparatus of Claim 1 wherein said at least one mating member comprises a projection.

3. The apparatus of Claim 1 wherein said plurality of receiving members comprise recesses.

4. The apparatus of Claim 1 wherein said plurality of receiving members include at least one tolerance-compensating receiving member varying in at least one dimension from an adjacent receiving member such that one receiving member serves as a best-fit receiving member for coupling with said at least one mating member of said first chip.

5. The apparatus of Claim 1 wherein said at least one mating member in said first chip and said plurality of receiving members of said second chip comprises waveguides.

6. The apparatus of Claim 1 wherein at least one of said plurality of receiving members and said at least one mating member includes angled walls for capturing and directing the other of said plurality of receiving members and said at least one mating member during assembly such that said first chip self-aligns relative to said second chip.

7. The apparatus of Claim 1 wherein said plurality of receiving members are formed at calibrated-dimension varying locations relative to a normally expected location of said at least one mating member when said first chip is properly aligned with said second chip.

8. A method of interconnecting a pair of chips comprising:

   providing a first chip; forming at least one projection in said first chip at a pre-selected location; providing a second chip; forming a plurality of recesses on said second chip at pre-selected locations relative to said at least one projection; positioning said at least one projection proximate said plurality of recesses; and assembling said first and second chips to move said first chip relative to said second chip until said at least one projection enters one of said plurality of recesses.

9. The method of Claim 8 wherein said forming said plurality of recesses step comprises pre-selecting locations of said plurality of recesses relative to said at least one projection wherein said plurality of recesses are formed at calibrated dimension varying locations relative to a normally expected location of said at least one projection when said first chip is properly assembled with said second chip.

10. The method of Claim 9 wherein said forming said plurality of recesses step is pre-selected to match a geometry of said first and second chips.

11. An optical apparatus comprising:

a first chip having an optical waveguide and at least one projection in said first chip at a preselected location from said optical waveguide; and a second chip having a plurality of recesses formed therein at pre-selected locations relative to said at least one projection, wherein one of said plurality of recesses of said second chip is coupled to said at least one projection of said first chip.

12. The optical apparatus of Claim 11 wherein said plurality of recesses include at least one tolerance-compensating recess varying in at least one dimension from an adjacent recess.

13. The optical apparatus of Claim 12 wherein the plurality of recesses include said at least one tolerance-compensating recess varying in depth from the adjacent recess.

14. The optical apparatus of Claim 12 wherein the plurality of recesses include at least one tolerance-compensating recess varying in proximity from the adjacent recess.

15. The optical apparatus of Claim 12 wherein the plurality of recesses include at least one tolerance-compensating recess varying in width from the adjacent recess.

16. The optical apparatus of Claim 12 wherein the plurality of recesses include at least one tolerance-compensating recess varying in a lateral displacement from the adjacent recess.

17. The optical apparatus of Claim 12 wherein the second chip comprises a calibrated substrate having the plurality of recesses.

18. The optical apparatus of Claim 17 wherein the first chip comprises an active optical component for hybrid integrating with the calibrated substrate.

19. The optical apparatus of Claim 12 wherein the plurality of recesses include a recess not coupled.

20. The optical apparatus of Claim 12 wherein the first chip comprises a laser array.

# FIG. 1

FIG. 2

EP 1 168 011 A1

# FIG. 3

# FIG. 4

# FIG. 5

# FIG. 6

# FIG. 7

# FIG. 8

# FIG. 9

# FIG. 10

**European Patent Office**

**EUROPEAN SEARCH REPORT**

Application Number

EP 00 40 1762

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 5 909 524 A (TABUCHI HARUHIKO) 1 June 1999 (1999-06-01) * column 25, line 44 - column 27, line 36; figures 26A,B * * column 31, line 40 - line 53 * * column 41, line 1 - line 61; figure 53 * * figure 65 * * figure 77 * | 1-20 | G02B6/30 G02B6/42 |
| X | WO 96 02861 A (SHEEM SANG K) 1 February 1996 (1996-02-01) * page 25, line 7 - page 29, line 15; figures 59-78 * * page 31, line 11 - line 34; figures 82-90 * | 1-12,14, 16,17,19 | |
| X | WO 86 02172 A (AMERICAN TELEPHONE & TELEGRAPH) 10 April 1986 (1986-04-10) * page 7, line 33 - page 9, line 10; figure 5 * | 1-3,5,6, 8,10,11 | |
| X | WO 98 45736 A (ALLIED SIGNAL INC) 15 October 1998 (1998-10-15) * page 19, line 9 - line 16; figure 2 * * page 21, line 5 - line 10; figure 6 * | 1,5,8,11 | TECHNICAL FIELDS SEARCHED (Int.Cl.7) G02B |
| X | GB 2 257 260 A (MARCONI GEC LTD) 6 January 1993 (1993-01-06) * column 9, paragraph 3; figure 6 * | 1-4,6,8, 10-12,19 | |

The present search report has been drawn up for all claims

| Place of search | Date of completion of the search | Examiner |
|---|---|---|
| BERLIN | 20 November 2000 | Ciarrocca, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 00 40 1762

This annex lists the patent family members relating to the patent documents cited in the above-mentioned European search report.
The members are as contained in the European Patent Office EDP file on
The European Patent Office is in no way liable for these particulars which are merely given for the purpose of information.

20-11-2000

| Patent document cited in search report | | Publication date | Patent family member(s) | | Publication date |
|---|---|---|---|---|---|
| US 5909524 | A | 01-06-1999 | JP | 9311253 A | 02-12-1997 |
| WO 9602861 | A | 01-02-1996 | AU | 3490095 A | 16-02-1996 |
| | | | CA | 2194986 A | 01-02-1996 |
| | | | CN | 1158169 A | 27-08-1997 |
| | | | EP | 0771432 A | 07-05-1997 |
| | | | JP | 11502314 T | 23-02-1999 |
| | | | US | 5633968 A | 27-05-1997 |
| | | | US | 5550942 A | 27-08-1996 |
| WO 8602172 | A | 10-04-1986 | EP | 0198030 A | 22-10-1986 |
| | | | JP | 62500471 T | 26-02-1987 |
| | | | US | 4725114 A | 16-02-1988 |
| WO 9845736 | A | 15-10-1998 | US | 5974214 A | 26-10-1999 |
| GB 2257260 | A | 06-01-1993 | NONE | | |

EPO FORM P0459

For more details about this annex : see Official Journal of the European Patent Office, No. 12/82